# EUROPEAN PATENT APPLICATION

(11) **EP 4 129 670 A1**
(43) Date of publication of application: **08.02.2023**
(21) Application number: 21775800.2
(22) Date of filing: 22.03.2021
(51) Int. Cl.: B32B 27/32, B65D 85/67, B32B 7/022, B32B 7/06

(54) **MULTILAYER BODY, ROLLED BODY USING SAME AND PACKAGE**

(30) Priority: 27.03.2020 JP 2020057581
(71) Applicant: Mitsui Chemicals, Inc., Tokyo 105-7122 (JP)
(72) Inventor: NOMA, Satoshi, Sodegaura-shi, Chiba 299-0265 (JP); MATAYOSHI, Tomoya, Sodegaura-shi, Chiba 299-0265 (JP); WATANABE, Takayuki, Sodegaura-shi, Chiba 299-0265 (JP)
(74) Representative: Hoffmann Eitle
(86) International application number: PCT/JP2021/011720
(87) International publication number: WO 2021/193537

(57) **Abstract**

A multilayer body (1) includes two or more lamination units, each of which includes a sheet (11) containing a 4-methyl-1-pentene-based polymer, and a release layer (12) that is disposed on at least one surface of the sheet, the sheet (11) preferably has at least one or more temperatures showing a local maximum value of a loss tangent (tan δ) , which is obtained by dynamic viscoelasticity measurement under conditions of a temperature rising rate of 4 °C/min, a frequency of 1.59 Hz, and a strain amount of 0.1%, in a range of 10°C or higher and 100°C or lower, the local maximum value of the loss tangent is preferably 0.5 or more and 3.5 or less, and both surfaces of the release layer 12 preferably have a static friction coefficient of 0.2 or more with respect to the sheet (11) (as measured at a temperature of 23°C and a relative humidity of 50% in accordance with ASTM D 1893 except for setting a test speed to 200 mm/min) .

## Description

### TECHNICAL FIELD

The present invention relates to a multilayer body, a rolled body using the same, and a package.

### BACKGROUND ART

Conventionally, as a method for storing a sheet wound into a roll shape, for example, there is a method disclosed in Patent Document 1. In Patent Document 1, when an adhesive sheet containing a polyvinyl acetal resin as a main component is wound into a roll shape using a protective sheet having an embossed shape formed on both surfaces and having releasability from the adhesive sheet, a technique for suppressing blocking of the adhesive sheet is disclosed.

Incidentally, since a 4-methyl-1-pentene-based polymer containing 4-methyl-1-pentene as a main constituent monomer has excellent various performances such as releasability, heat resistance, water resistance, and solvent resistance, the polymer is widely used for various applications. For example, Patent Document 2 discloses a sheet using a 4-methyl-1-pentene-based polymer.

### RELATED DOCUMENT

### PATENT DOCUMENT

[Patent Document 1] International Publication No. WO 2018/097145
[Patent Document 2] Japanese Unexamined Patent Publication No. 2018-44175

### SUMMARY OF THE INVENTION

### TECHNICAL PROBLEM

The sheet using a 4-methyl-1-pentene-based polymer as disclosed in Patent Document 2 has the characteristics that, for example, the sheet is hard at 20°C or lower, becomes soft in the vicinity of glass transition temperature (Tg), and the ratio of loss elastic modulus/storage elastic modulus (tan δ) is high.

According to the studies by the present inventors, such a sheet tends to become soft and become adhesive at in the vicinity of room temperature, and therefore tends to be easily blocked when the sheets are directly contacted with each other and laminated or wound. Then, it has been newly found that when the blocked sheet is to be peeled off, the shape of the sheet is greatly distorted, and then the problem of permanent deformation that the sheet cannot be restored to its original shape arises. On the other hand, when a film having releasability is used without any special devise in order to suppress such blocking, problems such as deviation between the sheet and the release film and deviation at both ends of the rolled sheet have arisen at the time of storage of sheets.

As a result of the intensive studies conducted by the present inventors from the viewpoint of solving the problem of permanent deformation while suppressing the occurrence of deviation of the sheet containing a predetermined 4-methyl-1-pentene-based polymer during storage, the present inventors have found that it is effective to control the static friction coefficient by providing a release layer on the surface where the sheets face each other, and completed the present invention.

The present invention has been made in view of the above circumstances, and provides a multilayer body capable of suppressing the occurrence of permanent deformation while suppressing the occurrence of deviation during storage of sheets.

### SOLUTION TO PROBLEM

That is, according to the present invention, a multilayer body shown below is provided.
[1] A multilayer body including:
   two or more lamination units, each of which includes a sheet containing a 4-methyl-1-pentene-based polymer, and a release layer that is disposed on at least one surface of the sheet,
   in which the sheet has at least one or more temperatures showing a local maximum value of a loss tangent (tan δ), which is obtained by dynamic viscoelasticity measurement under conditions of a temperature rising rate of 4 °C/min, a frequency of 1.59 Hz, and a strain amount of 0.1%, in a range of 10°C or higher and 100°C or lower, and the local maximum value of the loss tangent is 0.5 or more and 3.5 or less, and
   both surfaces of the release layer have a static friction coefficient of 0.2 or more with respect to the sheet (as measured at a temperature of 23°C and a relative humidity of 50% in accordance with ASTM D 1893 except for setting a test speed to 200 mm/min) .
[2] The multilayer body according to [1], in which the 4-methyl-1-pentene-based polymer includes a constitutional unit derived from 4-methyl-1-pentene and a constitutional unit derived from an α-olefin having 2 to 20 carbon atoms other than the 4-methyl-1-pentene.
[3] The multilayer body according to [1] or [2], in which when a sum of a constitutional unit derived from 4-methyl-1-pentene and a constitutional unit derived from an α-olefin having 2 to 20 carbon atoms other than the 4-methyl-1-pentene is 100 mol%, a content of the constitutional unit derived from the 4-methyl-1-pentene is 10 mol% or more and 90 mol% or less.
[4] The multilayer body according to any one of [1] to [3], in which the release layer includes a layer formed of a synthetic resin.
[5] The multilayer body according to any one of [1] to [4], in which an average thickness of the release layer is in a range of 10 to 85 um.
[6] The multilayer body according to [4] or [5], in which the synthetic resin includes one or two or more kinds selected from a polyolefin-based resin, a polyvinyl alcohol resin, a polyester resin, a polyamide resin, a polyaramide resin, a polycarbonate resin, and a polystyrene resin.
[7] The multilayer body according to any one of [1] to [6], in which the sheet is a foam and has a density of 0.10 to 0.80 g/cm³.
[8] The multilayer body according to any one of [1] to [7], in which an average thickness of the sheet is in a range of 0.1 mm or more and 30 mm or less.
[9] The multilayer body according to any one of [1] to [8], in which a tensile load [N/15 mm] of the release layer at a tensile elongation of 2% under conditions of a chuck-to-chuck distance of 100 mm, a tension rate of 100 mm/min, a temperature of 23°C, and a relative humidity of 50% is 1.0 N/15 mm or more and 1,000 N/15 mm or less.
[10] A rolled body in which the multilayer body according to any one of [1] to [9] is wound around a winding core.
[11] The rolled body according to [10], in which an overhang length of the winding core from at least one end portion in a width direction of the multilayer body with respect to a width of the multilayer body is 5 mm to 500 mm.
[12] A package including:
   the rolled body according to [10] or [11];
   a packaging container that accommodates the rolled body; and
   a support member that is disposed on a bottom surface of the packaging container and has a recess portion or a through hole into which the winding core of the rolled body is fitted,
   in which the winding core of the rolled body is supported by the recess portion or the through hole of the support member.
[13] A method for storing a sheet including:
   two or more steps of forming a lamination unit including
   a sheet containing a 4-methyl-1-pentene-based polymer, and
   a release layer that is disposed on at least one surface of the sheet; and
   storing the sheet in an environment at 10°C to 100°C,
   in which the sheet has at least one or more temperatures showing a local maximum value of a loss tangent (tan δ), which is obtained by dynamic viscoelasticity measurement under conditions of a temperature rising rate of 4 °C/min, a frequency of 1.59 Hz, and a strain amount of 0.1%, in a range of 10°C or higher and 100°C or lower, and the local maximum value of the loss tangent is 0.5 or more and 3.5 or less, and
   both surfaces of the release layer have a static friction coefficient of 0.2 or more with respect to the sheet (as measured at a temperature of 23°C and a relative humidity of 50% in accordance with ASTM D 1893 except for setting a test speed to 200 mm/min) .
[14] The method for storing a sheet according to [13], in which the sheet is stored in an environment at 20°C to 50°C.
[15] A method for storing the rolled body according to [10] or [11], including:
   storing the rolled body in an environment at 10°C to 100°C.
[16] The method for storing the rolled body according to [15],
   in which the rolled body is stored in an environment at 20°C to 50°C.
[17] A method for storing the package according to [12], including:
   storing the package in an environment at 10°C to 100°C.
[18] The method for storing the package according to [17], in which the package is stored in an environment at 20°C to 50°C.

### ADVANTAGEOUS EFFECTS OF INVENTION

According to the present invention, it is possible to provide a multilayer body capable of suppressing the occurrence of permanent deformation of a sheet while suppressing the occurrence of deviation during storage of the sheet.

### BRIEF DESCRIPTION OF THE DRAWINGS

Fig. 1 is a schematic perspective view of a multilayer body of the present embodiment.
Fig. 2 is a schematic perspective view of a rolled body of the present embodiment.
Fig. 3 is a schematic perspective view showing a method for producing a package of the present embodiment.

### DESCRIPTION OF EMBODIMENTS

Hereinafter, embodiments of the present invention will be described in detail with reference to the drawings.

In all the drawings, the same constitutional components are denoted by the same reference signs, and description thereof will not be repeated as appropriate.

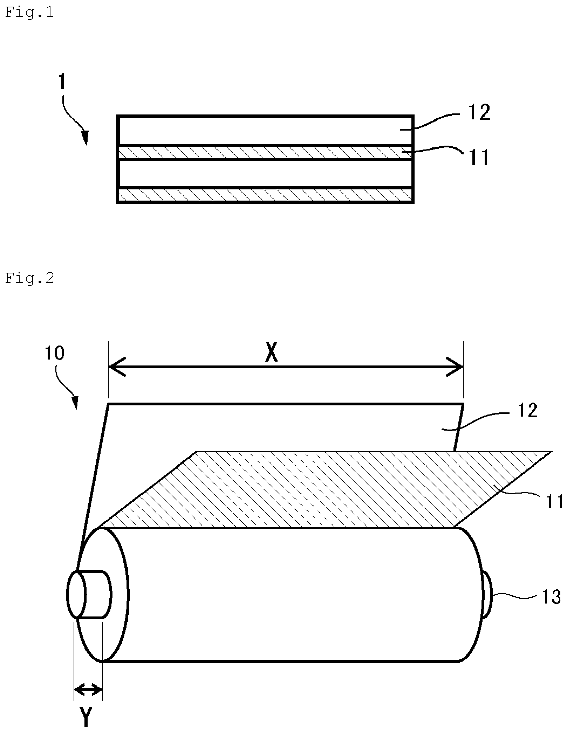

In order to avoid complication, (i) when a plurality of the same components are present on the same drawing, there may be a case where the reference numeral is given to only one component without giving the reference numeral to all the components; and (ii) in particular, in Fig. 2 and subsequent drawings, there may be a case where the reference numeral is not given again to the same components as those in Fig. 1.

All the drawings are merely illustrative. The shape, dimensional ratio, and the like of each of the members in the drawings do not necessarily correspond to those of an actual article.

In the present specification, unless otherwise specified, the term "substantially" means to include a range in consideration of production tolerances, assembly variations, and the like.

In the present specification, the expression "a to b" in the description of a numerical range represents a or more and b or less unless specified otherwise. For example, "1% to 5% by mass" means "1% by mass or more and 5% by mass or less".

### 1. Multilayer Body

Fig. 1 is a schematic perspective view of a multilayer body of the present embodiment.

As shown in Fig. 1, a multilayer body 1 of the present embodiment includes two lamination units, each of which includes a sheet 11 containing a 4-methyl-1-pentene-based polymer (hereinafter, also referred to as "sheet 11"), and a release layer 12 that is disposed on at least one surface of the sheet 11.

In addition, the sheet 11 has at least one or more temperatures showing a local maximum value of a loss tangent (tan δ), which is obtained by dynamic viscoelasticity measurement under conditions of a temperature rising rate of 4 °C/min, a frequency of 1.59 Hz, and a strain amount of 0.1%, in a range of 10°C or higher and 100°C or lower, and the local maximum value of the loss tangent is 0.5 or more and 3.5 or less, and both surfaces of the release layer 12 have a static friction coefficient of 0.2 or more with respect to the sheet (as measured at a temperature of 23°C and a relative humidity of 50% in accordance with ASTM D 1893 except for setting the test speed to 200 mm/min) .

With this, it is possible to suppress the occurrence of permanent deformation while suppressing the occurrence of deviation during storage of the sheet 11.

It should be noted that the number of the lamination units of the multilayer body 1 may be three or more, and any plurality of sheets 11 may be laminated via the release layer 12.

### [Static Friction Coefficient]

In the multilayer body 1, the static friction coefficient with respect to the sheets 11 on both sides of the release layer 12 (measured at a temperature of 23°C and a relative humidity of 50% in accordance with ASTM D 1893, except for setting the test speed to 200 mm/min) is 0.2 or more. The upper limit value of the static friction coefficient is not particularly limited, and examples thereof include 10 or less, preferably 5 or less, and more preferably 3 or less.

The static friction coefficient of one surface and the static friction coefficient of the other surface of the release layer 12 with respect to the sheet 11 may be the same or different from each other as long as both static friction coefficients satisfy 0.2 or more. For example, in a case where the static friction coefficient of one surface with respect to the sheet 11 is 0.2 to 0.8, and preferably 0.2 to 0.7, the static friction coefficient of the other surface is preferably 1.3 or more. In addition, in a case where the static friction coefficient of one surface and the static friction coefficient of the other surface with respect to the sheet 11 are the same, the static friction coefficients are preferably 0.8 or more. From the viewpoint of effectively obtaining blocking resistance, it is preferable that the static friction coefficient of one surface and the static friction coefficient of the other surface are the same, or the absolute value of the difference between the static friction coefficients is 0.2 or less.

The static friction coefficient of the release layer 12 with respect to the sheet 11 is measured under the conditions of a temperature of 23°C and a relative humidity of 50% in accordance with ASTM D 1893, except for setting the test speed to 200 mm/min.

The static friction coefficient of the release layer 12 with respect to the sheet 11 is adjusted by the material constituting the release layer 12, the surface shape of the release layer 12, the constitutional material of the sheet 11, and the like, which will be described later.

Hereinafter, each layer constituting the multilayer body 1 will be described in detail.

### <Sheet>

### [Loss Tangent (tan δ)]

The sheet 11 according to the present embodiment has at least one or more temperatures showing a local maximum value of a loss tangent (tan δ), which is obtained by dynamic viscoelasticity measurement under the conditions of a temperature rising rate of 4 °C/min, a frequency of 1.59 Hz, and a strain amount of 0.1%, in a range of 10°C or higher and 100°C or lower, and the local maximum value of the loss tangent is 0.5 or more and 3.5 or less.

For example, the sheet 11 can be cut into a test piece having a size of 30 mm in length × 10 mm in width, and measurement can be performed using a rheometer under the conditions of a frequency of 1.59 Hz, a temperature rising rate of 4 °C/min, a measurement temperature range of 0°C to 110°C, a strain amount of 0.1%, a chuck-to-chuck distance of 20 mm, and a twist mode.

That is, in the sheet 11 of the present embodiment, the temperature range showing the local maximum value of the loss tangent (tan δ) and the local maximum value of the loss tangent are adjusted to the above ranges, and thus in a case where the sheets 11 are directly laminated, blocking easily occurs.

The details of the reason for this are not clear, but the reason may be considered as follows.

First, an increase in the loss tangent (tan δ) in a relatively low frequency region of 1.59 Hz means that the sheet easily follows a force (also referred to as a slow force) applied over time, compared to a force such as a momentary impact. Therefore, in the case where the sheets 11 are directly laminated, it is presumed that the surface shapes of the sheets 11 follow each other and blocking easily occurs.

In addition, in a case where the sheet 11 whose local maximum value of the loss tangent in a range of 10°C or higher and 100°C or lower is in the above range is stored in a normal environmental temperature of the multilayer body 1, the sheet 11 is easily softened. Thus, it is presumed that in a case where the sheets 11 are directly laminated, deformation easily occurs, the sheets come into close contact with each other, and blocking easily occurs.

As a result, when the sheets 11 are to be peeled off from each other, it is considered that permanent deformation easily occurs.

The loss tangent of the sheet 11 according to the present embodiment can be controlled to be in the above range, for example, by appropriately adjusting (1) the kind and mixing ratio of a 4-methyl-1-pentene-based polymer (a) described later, (2) the presence or absence of crosslinking of the sheet 11, (3) a method for molding the sheet 11, and the like.

Specifically, for example, the mixing ratio of the 4-methyl-1-pentene-based polymer (a) in the sheet 11 may be increased, and the sheet 11 may not be crosslinked.

It is preferable that the sheet 11 according to the present embodiment is uncrosslinked from the viewpoint of obtaining good shape followability. That is, it is preferable that the sheet 11 according to the present embodiment is an uncrosslinked sheet that has not been subjected to a crosslinking treatment such as ionization radiation crosslinking using an electron beam or γ-ray, for example. With this, the local maximum value of the loss tangent in a range of 10°C or higher and 100°C or lower can be improved, and a sheet 11 having more excellent shape followability can be obtained.

In the sheet 11 according to the present embodiment, it is preferable that at least one or more temperatures showing the local maximum value of the loss tangent (tan δ) of dynamic viscoelasticity are present in a range of 10°C or higher and 80°C or lower, it is preferable that one or more temperatures showing the local maximum value of the loss tangent are present in a range of 10°C or higher and 60°C or lower, it is even more preferable that one or more temperatures showing the local maximum value of the loss tangent are present in a range of 10°C or higher and 50°C or lower, and it is particularly preferable that one temperature showing the local maximum value of the loss tangent is present in a range of 10°C or higher and 40°C or lower. This makes it possible to obtain a sheet 11 having even more excellent shape followability.

In addition, in the sheet 11 according to the present embodiment, the local maximum value of the loss tangent is preferably 0.8 or more, more preferably 1.0 or more, and even more preferably 1.2 or more. In the sheet according to the present embodiment, the local maximum value of the loss tangent is preferably 3.0 or less, and more preferably 2.8 or less.

With this, it is possible to improve the performance balance between flexibility and shape followability of the sheet 11 according to the present embodiment. Here, the larger the local maximum value of the loss tangent, the stronger the viscous properties of the sheet 11. The sheet 11 which has strong viscous properties can convert more of mechanical energy given at a time of deformation into thermal energy and absorb more energy. Therefore, it is considered that the restoration speed after deformation becomes more moderate. As a result, the shape followability is exhibited while maintaining the flexibility of the sheet 11.

### [Thickness]

The thickness of the sheet 11 is not particularly limited, and is preferably in a range of 0.1 mm or more and 30 mm or less, more preferably in a range of 0.1 mm or more and 5 mm or less, and even more preferably in a range of 0.1 mm or more and 3 mm or less.

By setting the thickness of the sheet 11 to the above lower limit value or more, it becomes easy to maintain the performance such as shape followability, mechanical properties, moldability, and the like of the sheet 11 while maintaining the peelability.

By setting the thickness of the sheet 11 to be the above upper limit value or less, a permanent deformation suppressing function can be easily exhibited, and the lightness, appearance, and handleability can be improved.

The sheet 11 according to the present embodiment may have a ventilation hole in order to enhance air permeability according to the application. For example, by using processing techniques such as mechanical punching, needle processing, laser perforation, and water jet, a large number of ventilation holes communicating with each other can be provided on the front and back sides.

### [Aspect]

The sheet 11 according to the present embodiment may be a foam. With this, characteristics such as lightness, impact resistance, flexibility, and followability are exhibited, and blocking in the multilayer body 1 can be easily suppressed. In a case of a foam, it is preferable to mold the sheet together with a foaming agent described later.

In a case where the sheet 11 of the present embodiment is a foam, the density thereof is preferably 0.10 to 0.80 g/cm³, more preferably 0.20 to 0.75 g/cm³, even more preferably 0.30 to 0.70 g/cm³, and still even more preferably 0.40 to 0.65 g/cm³.

By setting the density of the foam to the above lower limit value or more, a good balance between shape followability, mechanical properties, moldability and the like can be obtained. On the other hand, by setting the density of the foam to the above upper limit value or less, the lightness, appearance, and handleability can be improved.

### [Application]

Since the sheet 11 according to the present embodiment has various functions such as shape followability, mechanical properties, moldability, moisture resistance, and the like, the sheet can be widely used depending on the functions.

Hereinafter, each component constituting the sheet 11 according to the present embodiment will be described.

### [4-Methyl-1-Pentene-Based Polymer (a)]

Examples of the 4-methyl-1-pentene-based polymer (a) according to the present embodiment include a 4-methyl-1-pentene·α-olefin copolymer (c) including a constitutional unit (c1) derived from 4-methyl-1-pentene and a constitutional unit (c2) derived from an α-olefin having 2 to 20 carbon atoms other than 4-methyl-1-pentene.

Here, in the present embodiment, the "α-olefin having 2 to 20 carbon atoms" means not including 4-methyl-1-pentene unless otherwise specified.

In the 4-methyl-1-pentene·α-olefin copolymer (c) according to the present embodiment, from the viewpoint of further improving flexibility and storage stability of the sheet 11 of the multilayer body 1, when a sum of the constitutional unit (c1) and the constitutional unit (c2) is 100 mol%, it is preferable that a content of the constitutional unit (c1) is 10 mol% or more and 90 mol% or less, and a content of the constitutional unit (c2) is 10 mol% or more and 90 mol% or less.

In addition, in the 4-methyl-1-pentene·α-olefin copolymer (c) according to the present embodiment, from the viewpoint of further improving flexibility, mechanical properties, or the like of the sheet 11, when the sum of the constitutional unit (c1) and the constitutional unit (c2) is 100 mol%, it is more preferable that the content of the constitutional unit (c1) is 30 mol% or more and 90 mol% or less, and the content of the constitutional unit (c2) is 10 mol% or more and 70 mol% or less, it is even more preferable that the content of the constitutional unit (c1) is 50 mol% or more and 90 mol% or less, and the content of the constitutional unit (c2) is 10 mol% or more and 50 mol% or less, it is still even more preferable that the content of the constitutional unit (c1) is 60 mol% or more and 90 mol% or less and the content of the constitutional unit (c2) is 10 mol% or more and 40 mol% or less, and it is particularly preferable that the content of the constitutional unit (c1) is 65 mol% or more and 90 mol% or less and the content of the constitutional unit (c2) is 10 mol% or more and 35 mol% or less.

In the present embodiment, examples of the α-olefin having 2 to 20 carbon atoms used in the 4-methyl-1-pentene·α-olefin copolymer (c) includes a linear or branched α-olefin, a cyclic olefin, an aromatic vinyl compound, a conjugated diene, a functionalized vinyl compound, and the like, and the linear α-olefin is preferable.

The number of carbon atoms of the linear α-olefin is preferably 2 to 10, and more preferably 2 to 3. Examples of the linear α-olefin include ethylene, propylene, 1-butene, 1-pentene, and the like. One kind or two or more kinds selected from ethylene, propylene, 1-butene, 1-pentene, 1-hexene, 1-octene, and 1-decene are preferable, and at least one kind selected from ethylene and propylene is more preferable.

The number of carbon atoms of the branched α-olefin is preferably 5 to 20, and more preferably 5 to 15. Examples of the branched α-olefin include 3-methyl-1-butene, 3-methyl-1-pentene, 3-ethyl-1-pentene, and the like.

The number of carbon atoms of the cyclic olefin is preferably 5 to 15. Examples of the cyclic olefin include cyclopentene, cyclohexene, cycloheptene, norbornene, 5-methyl-2-norbornene, tetracyclododecene, vinylcyclohexane, and the like.

Examples of the aromatic vinyl compound include mono- or poly-alkylstyrenes such as styrene, α-methylstyrene, o-methylstyrene, m-methylstyrene, p-methylstyrene, o,p-dimethylstyrene, o-ethylstyrene, m-ethylstyrene, p-ethylstyrene, and the like.

The number of carbon atoms of the conjugated diene is preferably 4 to 20, and more preferably 4 to 10. Examples of the conjugated diene include 1,3-butadiene, isoprene, chloroprene, 1,3-pentadiene, 2,3-dimethylbutadiene, 4-methyl-1,3-pentadiene, 1,3-hexadiene, 1,3-octadiene, and the like.

Examples of the functionalized vinyl compound include unsaturated carboxylic acids such as a hydroxyl group-containing olefin, a halogenated olefin, a (meth) acrylic acid, a propionic acid, a 3-butenoic acid, a 4-pentenoic acid, a 5-hexenoic acid, a 6-heptenoic acid, a 7-octenoic acid, an 8-nonenoic acid, a 9-decenoic acid, and a 10-undecenoic acid, and anhydrides or acid halides thereof, unsaturated amines such as allylamine, 5-hexenamine, 6-hepteneamine, and the like, (2,7-octadienyl) succinic anhydride, pentapropenyl succinic anhydride, an unsaturated epoxy compound, an ethylenically unsaturated silane compound, and the like.

Examples of the hydroxyl group-containing olefin include a linear or branched terminal hydroxylated α-olefin having 2 to 20 carbon atoms, and preferably 2 to 15 carbon atoms, and the like.

Examples of the halogenated olefin include a linear or branched halogenated α-olefin having 2 to 20 carbon atoms, and preferably 2 to 15 carbon atoms, and the like.

These α-olefins having 2 to 20 carbon atoms can be used alone or in combination of two or more kinds thereof. Among these, ethylene and propylene are preferable, but the use of propylene is particularly preferable from a viewpoint of further improving flexibility and the like.

It should be noted that the 4-methyl-1-pentene·α-olefin copolymer (c) may contain constitutional units other than the constitutional unit (c1) and the constitutional unit (c2) within a range of not impairing the object of the present invention. Other constitutions include constitutional units derived from non-conjugated polyene.

Examples of the non-conjugated polyene include a linear, branched, or cyclic diene having preferably 5 to 20 carbon atoms, and more preferably 5 to 10 carbon atoms, various norbornenes, norbornadienes, and the like. Among these, 5-vinylidene-2-norbornene and 5-ethylidene-2-norbornene are preferable.

From a viewpoint of further improving discoloration, flexibility or mechanical strength of the sheet, the intrinsic viscosity [η] in decalin of 135°C of the 4-methyl-1-pentene-based polymer (a) according to the present embodiment is preferably 0.01 to 5.0 dL/g, more preferably 0.1 to 4.0 dL/g, even more preferably 0.5 to 3.0 dL/g, and particularly preferably 1.0 to 2.8 dL/g.

The density of the 4-methyl-1-pentene-based polymer (a) according to the present embodiment, measured by ASTM D 1505 (underwater substitution method), is preferably 0.810 to 0.850 g/cm³, more preferably 0.820 to 0.850 g/cm³, and even more preferably 0.830 to 0.850 g/cm³.

The 4-methyl-1-pentene-based polymer (a) according to the present embodiment can be produced by various methods. For example, it is possible to produce the 4-methyl-1-pentene-based polymer by using known catalysts such as magnesium-supported titanium catalysts; metallocene catalysts described in International Publication No. WO 01/53369, International Publication No. WO 01/027124, Japanese Unexamined Patent Publication No. H03-193796, Japanese Unexamined Patent Publication No. H02-41303, and the like; olefin polymerization catalysts containing a metallocene compound described in International Publication No. WO 2011/055803, and the like.

Although the content of the 4-methyl-1-pentene-based polymer (a) in the sheet 11 according to the present embodiment is not particularly limited, when the entire content of the sheet 11 is 100% by mass, the content of the 4-methyl-1-pentene-based polymer (a) is preferably 50% by mass or more, more preferably 60% by mass or more, even more preferably 65% or more by mass, still even more preferably 70% by mass or more, and particularly preferably 75% by mass or more, and preferably 100% by mass or less, more preferably 99.5% by mass or less, even more preferably 99% by mass or less, still even more preferably 98% by mass or less, and particularly preferably 97% by mass or less.

With this, it is possible to obtain a sheet 11 which has excellent balance between discoloration, color development, flexibility, shape followability, lightness, mechanical properties, handleability, appearance, moldability, moisture resistance, and the like.

The sheet 11 according to the present embodiment may contain components other than the above-mentioned 4-methyl-1-pentene-based polymer (a).

### [Modified Resin (a2)]

From a viewpoint of further improving appearance, texture, and the like, the sheet 11 according to the present embodiment may contain a modified resin (a2) (here, the 4-methyl-1-pentene-based polymer (a) according to the present embodiment is excluded). Examples of the modified resin (a2) according to the present embodiment include one kind or two or more kinds selected from a thermoplastic resin, a thermoplastic elastomer, and a rubber.

Examples of the thermoplastic resin (here, the 4-methyl-1-pentene-based polymer (a1) according to the present embodiment is excluded) include thermoplastic polyolefin resins such as low-density polyethylene, medium-density polyethylene, high-density polyethylene, high-pressure low-density polyethylene, polypropylene, poly 1-butene, poly 4-methyl-1-pentene, poly 3-methyl-1-butene, ethylene·α-olefin copolymer, propylene·α-olefin copolymer, 1-butene·α-olefin copolymer, cyclic olefin copolymer, and chlorinated polyolefin; thermoplastic polyamide-based resins such as aliphatic polyamide (nylon 6, nylon 11, nylon 12, nylon 66, nylon 610, nylon 612) and polyether block amide copolymer; thermoplastic polyester-based resins such as polyethylene terephthalate and polybutylene terephthalate; thermoplastic vinyl aromatic resins such as polystyrene, ABS resin, and AS resin; vinyl chloride resins; vinylidene chloride resins; acrylic resins; ethylene-vinyl acetate copolymers; ethylene-methacrylic acid acrylate copolymers; ionomers; ethylene-vinyl alcohol copolymers; polyvinyl alcohols; fluorine-based resins such as polyvinyl fluoride resin, polytetrafluoroethylene, polyvinylidene fluoride, and ETFE; polycarbonate; polyacetal; polyphenylene oxide; polyphenylene sulfide; polyimide; polyarylate; polysulfone; polyether sulfone; rosin-based resins; terpene-based resins; petroleum resins; and the like.

Examples of the rubber include ethylene·α-olefin-diene copolymer rubber, propylene·α-olefin·diene copolymer rubber, and the like.

In addition, examples of the thermoplastic elastomer include an olefin-based elastomer, a styrene-based elastomer, an acid-modified styrene-based elastomer, a vinyl chloride-based elastomer, a urethane-based elastomer, an ester-based elastomer, an amide-based elastomer, and the like.

In addition, these modified resins (a2) optionally be modified by acid with acrylic acid, methacrylic acid, maleic acid or the like.

These modified resins (a2) may be used alone or in combination of two or more kinds thereof.

Among these modified resins (a2), one kind or two or more kinds selected from low-density polyethylene, medium-density polyethylene, high-density polyethylene, high-pressure low-density polyethylene, polypropylene, poly 1-butene, poly 4-methyl-1-pentene, poly 3-methyl-1-butene, ethylene·α-olefin copolymer, propylene·α-olefin copolymer, and 1-butene·α-olefin copolymer are preferable, and one kind or two or more kinds selected from polyethylene, polypropylene, poly-1-butene, poly-4-methyl-1-pentene, ethylene·α-olefin copolymer, propylene·α-olefin copolymer, 1-butene·α-olefin copolymer, ethylene·vinyl acetate copolymer, polyether block amide, ionomer, fluorine-based resin, acid-modified fluorine-based resin, rosin-based resin, terpene-based resin, petroleum resin, and styrene-based elastomer, the addition of which improve melt tension are more preferable.

In addition, those having appropriate compatibility with the 4-methyl-1-pentene-based polymer (a) according to the present embodiment are even more preferable. Further, among styrene-based elastomers, vinyl SIS (product name: HYBRAR, brand: 5127) and SEPS (product name: HYBRAR, brand: 7125) manufactured by Kuraray Co., Ltd., and SEEPS (Product name: HYBRAR, brand: 7311F), SEBS (Product name: KRATON, brand: G1657MS) manufactured by Kraton Polymer Japan Corporation, and SEBS (product name: S.O.E, brand: S1605, S1611, and L609) manufactured by Asahi Kasei Corporation can be preferably used, from a viewpoint of compatibility, a temperature range showing the local maximum value of the loss tangent, and a magnitude of the local maximum value of the loss tangent.

For the sheet 11 according to the present embodiment, one kind selected from these modified resins (a2) can be used alone or two or more kinds thereof can be used in combination.

The content of the modified resin (a2) in the sheet 11 according to the present embodiment is not particularly limited, and when the entire content of the sheet 11 is 100% by mass, the content of the modified resin (a2) is preferably 0.5% by mass or more, more preferably 1% by mass or more, even more preferably 2% by mass or more, still even more preferably 3% by mass or more, and preferably 90% by mass or less, more preferably 70% by mass or less, even more preferably 50% by mass or less, still even more preferably 30% by mass or less, and particularly preferably 25% by mass or less.

When the content of the modified resin (a2) is the lower limit value or more, it is possible to further improve appearance, texture, and the like of the sheet 11 according to the present embodiment. When the content of the modified resin (a2) is the upper limit value or less, it is possible to further improve performance balance of flexibility and the like of the sheet 11 according to the present embodiment.

### [Other Components]

The sheet 11 according to the present embodiment may be mixed with additives such as a foaming agent, a heat stabilizer, an antioxidant, an ultraviolet absorber, a pigment, an antistatic agent, a copper inhibitor, a flame retardant, a neutralizing agent, a plasticizer, a nucleating agent, a weather stabilizer, a light stabilizer, an anti-aging agent, a fatty acid metal salt, a softener, a dispersant, a coloring agent, a lubricant, a natural oil, a synthetic oil, a wax, and the like, depending on the necessity. Among these, in particular, the plasticizer, the softener, the natural oil, and the synthetic oil may be used by controlling the kind and the addition amount in order to adjust a temperature showing a local maximum value of the loss tangent (tan δ) of solid viscoelasticity and the local maximum value of the loss tangent of the sheet 11 according to the present embodiment.

Examples of the above-mentioned foaming agent include a chemical foaming agent and a physical foaming agent.

Examples of the chemical foaming agent include sodium bicarbonate, ammonium bicarbonate, various carboxylate salts, sodium borohydride, azodicarbonamide, N,N-dinitrosopentamethylenetetramine, P,P-oxybis(benzenesulfonylhydrazide), azobisisobutyronitrile, paratoluene sulfonyl hydrazide, sodium bicarbonate, sodium citrate, and the like.

Examples of the physical foaming agent include carbon dioxide, nitrogen, or a mixture of carbon dioxide and nitrogen, and any of these can be supplied in any of a gaseous, liquid, or supercritical state.

### [Production Method]

The resin composition containing the 4-methyl-1-pentene-based polymer (a) which becomes the raw material of the sheet 11 can be prepared by mixing or melting and kneading each component by a dry blend, a tumbler mixer, a Banbury mixer, a single screw extruder, a twin screw extruder, a high-speed twin screw extruder, a hot roll, and the like.

In addition, in a case where the sheet 11 according to the present embodiment is a foam, for example, the sheet can be obtained by foam-molding a resin composition containing a foaming agent into a specific shape using a molding apparatus.

Further, it is preferable that the chemical foaming agent is uniformly mixed with the resin composition before being put into an extrusion molding machine. In addition, in a case where carbon dioxide is used as the physical foaming agent, it is preferable that the resin composition comes into a state of being kneaded and plasticized in the extrusion molding machine, and then is directly injected into the extrusion molding machine.

The expansion ratio is not particularly limited and can be appropriately determined in consideration of all physical properties of the obtained sheet 11.

### <Release Layer>

The release layer 12 of the present embodiment is used to suppress permanent deformation of the sheet 11 while reducing blocking of the sheet 11.

### [Tensile Load]

The tensile load of the release layer 12 is preferably 1.0 N/15 mm or more, and more preferably 2.0 N/15 mm or more. With this, it is possible to prevent the winding wrinkles from entering the sheet when the multilayer body is wound.

On the other hand, the upper limit value of the tensile load of the release layer 12 is not particularly limited, and examples thereof include 1,000 N/15 mm or less. Further, from the viewpoint of suppressing winding deviation while highly reducing blocking, the upper limit value of the tensile load of the release layer 12 is preferably 100 N/15 mm or less, more preferably 50 N/15 mm or less, and even more preferably 35 N/15 mm or less.

The tensile load of the release layer 12 is a strip-shaped test piece with a width of 15 mm, and is measured as a tensile load [N/15 mm] at a tensile elongation of 2% under conditions of a chuck-to-chuck distance of 100 mm, a tension rate of 100 mm/min, a temperature of 23°C, and a relative humidity of 50%.

Examples of the material constituting the release layer 12 include layers formed of paper, a non-woven fabric, and a synthetic resin, and a combination thereof may also be used. From the viewpoint of achieving both good blocking resistance and permanent deformation suppression effect, it is preferable that the multilayer body includes a layer formed of a synthetic resin.

Examples of the synthetic resin include polyolefin-based resins such as polyethylene, and polypropylene; polyvinyl alcohol resins such as polyvinyl alcohol, and ethylene-vinyl alcohol copolymer; polyester resins such as polyethylene terephthalate, and polybutylene terephthalate; polyamide resins such as nylon 6, nylon 66, nylon 610, nylon 11, nylon 12, MXD nylon (polymetaxylylene adipamide), and copolymers thereof; polyaramide resins; polycarbonate resins; polystyrene resins; polyacetal resins; fluororesins; polyether-based, adipate ester-based, caprolactone ester-based, and polycarbonate ester-based thermoplastic polyurethanes; vinyl halide resins such as polyvinylidene chloride and polyvinyl chloride; polyacrylonitriles; copolymers of α-olefin with vinyl acetate, acrylate or methacrylate, for example, ethylene-vinyl acetate copolymer, ethylene-ethyl acrylate copolymer, ethylene-methyl methacrylate copolymer, ethylene-acrylic acid copolymer and ethylene-methacrylic acid copolymer; acid-modified olefin resins prepared by modifying an α-olefin (co) polymer such as polyethylene or polypropylene with an unsaturated carboxylic acid such as acrylic acid, methacrylic acid, maleic acid, maleic anhydride, fumaric acid or itaconic acid; ionomer resins prepared by processing an ethylene-methacrylic acid copolymer or the like with Na ion or Zn ion; mixtures thereof; and the like. Among these, from the viewpoint of obtaining both good blocking resistance and the effect of suppressing permanent deformation, the synthetic resin preferably includes one or two or more kinds selected from a polyolefin-based resin, a polyvinyl alcohol resin, a polyester resin, a polyamide resin, a polyaramide resin, a polycarbonate resin, and a polystyrene resin, and more preferably includes a polyolefin-based resin and a polyester resin.

Further, the layer formed of a synthetic resin may be one layer or two or more layers.

A method for producing a layer formed of a synthetic resin (film formation method) is not particularly limited. Known methods such as extrusion, inflation, and calendaring can be applied. Even in a case where the layer formed of a synthetic resin has a multilayer structure, known methods such as coextrusion (extrusion using a multi-die) and various lamination methods can be appropriately applied.

When producing a layer formed of a synthetic resin, additives such as a slip agent may be kneaded or applied as needed. Further, two or more kinds of resins may be blended. In addition, at the time of film formation, a stretching treatment, an annealing treatment or the like may be performed.

The average thickness of the release layer 12 is preferably 10 to 1,000 um. The upper limit value of the average thickness of the release layer 12 is more preferably 200 um or less, even more preferably 100 um or less, and still even more preferably 85 um or less. On the other hand, the lower limit value of the average thickness of the release layer 12 is more preferably 15 pm or more, and even more preferably 20 um or more.

The surface of the release layer 12 may be provided with an additional layer, or may be subjected to a surface treatment such as coating, polishing, or roughening in order to impart some function.

The release layer 12 may be transparent or opaque. In terms of visibility, the release layer is preferably transparent.

It should be noted that the above-mentioned multilayer body 1 is an example, and can be a multilayer body having various configurations other than the above as long as the effect of the present invention is not impaired.

### 2. Rolled Body

Fig. 2 is a schematic perspective view of a rolled body of the present embodiment.

As shown in Fig. 2, the rolled body 10 is formed by winding the multilayer body in which the sheet 11 and the release layer 12 are laminated around a winding core 13. In the present embodiment, the rolled body 10 has two to several thousand lamination units including the sheet 11 and the release layer 12.

In addition, it is preferable that the release layer 12 has a length and a width equal to or more than those of the sheet 11.

In addition, the length of the winding core 13 is preferably the same as or longer than the width of the multilayer body (X in Fig. 2; the length in the direction perpendicular to the flow direction), and from the viewpoint of stable storage of the rolled body 10, it is preferable that the winding core 13 is overhung from at least one end portion of the multilayer body. Specifically, it is preferable that a length Y of the overhanging portion of the winding core 13 with respect to the width X of the multilayer body is 5 to 500 mm.

The overhanging portion may be an overhanging portion from at least one end portion with respect to the width of the multilayer body, or may be an overhanging portion extending from both end portions . In a case where the overhanging portions are located at both end portions, the overhanging lengths Y may be the same or different from each other, but from the viewpoint of good handleability, it is preferable that the overhanging lengths are the same.

The material of the winding core 13 is not particularly limited, and examples thereof include paper, a thermoplastic resin, a thermosetting resin, a fiber reinforced plastic, a metal, and the like.

The diameter (outer diameter) of the winding core 13 is not particularly limited, and is, for example, 25 to 300 mm.

Further, the length and the width of the multilayer body 1 can be appropriately set according to the application, but from the viewpoint of reducing blocking while suppressing the deviation more stably and highly, for example, it is suitable that the width is 10 to 200 cm, and the total length is 0.1 to 100 m.

Since the rolled body 10 of the present embodiment is formed by laminating the sheet 11 and the release layer 12, as in the case of the above-mentioned multilayer body 1, it is possible to suppress the occurrence of permanent deformation while suppressing the occurrence of deviation during storage of the sheet 11.

### 3. Package

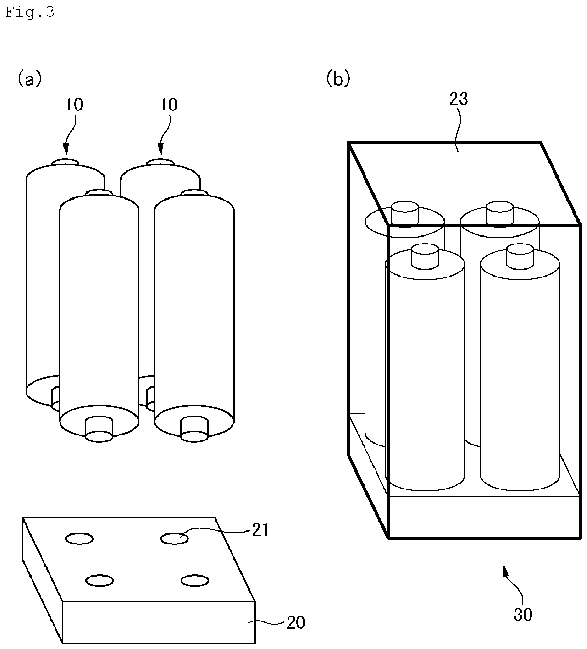

Fig. 3 is a schematic perspective view showing a method for producing a package 30 of the present embodiment.

Fig. 3(a) shows a support member 20 having four rolled bodies 10 and four recess portions 21 into which a part of the winding core 13 of the rolled body 10 is fitted. More specifically, in the rolled body 10, the winding core 13 is overhanging, and the depth of the recess portion 21 is equal to or less than the overhanging length. As a result, the widthwise end portion of the rolled body 10 is less likely to come into contact with the surface of the support member 20, and the risk of deformation when a load is applied due to the contact can be reduced.

In addition, the shape and the size of the recess portion 21 are not particularly limited and are appropriately adjusted according to the shape and the size of the winding core 13. However, from the viewpoint of stably supporting the rolled body 10 in the vertical direction (axial direction), it is preferable that the depth of the recess portion 21 is smaller than the overhanging portion of the winding core 13.

Further, although the arrangement of the recess portions 21 is appropriately adjusted, it is preferable that the recess portions are disposed at the minimum intervals so that the outer peripheral surfaces of the plurality of rolled bodies 10 do not come into contact with each other. As a result, it is possible to further save a space while suppressing blocking between the rolled bodies 10.

In addition, in Fig. 3(a), an example in which the support member 20 shows the recess portion 21 is shown, but instead of the recess portion 21, the support member 20 may have a through hole penetrating the support member.

The material of the support member 20 is not particularly limited, and examples thereof include paper, a thermoplastic resin, a thermosetting resin, a fiber reinforced plastic, a metal, and the like. Among these, paper is preferable from the viewpoint of cost reduction and good workability, and thermosetting resins and fiber reinforced plastics may be used from the viewpoint of obtaining mechanical strength.

Next, Fig. 3(b) shows a packaging container 23 in which the rolled body 10 is accommodated and the support member 20 is disposed on the bottom surface. Further, the support member 20 is fitted to the bottom surface of the package 30 so as not to cause positional deviation. With this, the plurality of rolled bodies 10 can be stably packed and stored. Specifically, a gap between the support member 20 and the package 30 is preferably 10 mm or less.

The material of the package 30 is not particularly limited, and examples thereof include paper, a thermoplastic resin, and a thermosetting resin. Among these, paper is preferable from the viewpoint of cost reduction and good workability, and thermosetting resins and fiber reinforced plastics may be used from the viewpoint of obtaining mechanical strength.

Further, in the package 30, a self-standing partition plate may be disposed so that the rolled bodies 10 do not come into contact with each other due to vibration or the like (not shown). In this case, it is preferable that the partition plate and the rolled body 10 are separated from each other as much as possible so as not to come into direct contact with each other.

Examples of the material of the partition plate include the same materials as those used in the package 30. In addition, the partition plate and the package 30 may be formed of the same material or may be formed of different materials.

Similar to the rolled body 10 described above, the package 30 of the present embodiment can suppress the occurrence of deviation while suppressing the occurrence of permanent deformation during storage of the sheet 11.

It should be noted that in the present embodiment, the example in which the package 30 packages and packs four rolled bodies 10 has been described, but the number of rolled bodies 10 is not limited thereto. The number of rolled bodies may be 4 or less, 5 or more, or may be a unit of several tens.

### 4. Storage Method

In the present embodiment, all of the above multilayer body 1, the rolled body 10, and the package 30 may be stored in an environment at -30°C to 100°C, and are preferably stored in an environment at 0°C to 100°C. In other words, by storing the sheet 11 in an environment at preferably 0°C to 100°C, the occurrence of deviation during storage of the sheet 11 is suppressed, and permanent deformation is suppressed.

In addition, a more preferable lower limit value of the storage temperature is 20°C or higher, while a more preferable upper limit value thereof is in the order of 50°C or lower, 30°C or lower, 27°C or lower, and 25°C or lower. By setting the storage environmental temperature to be in such a numerical range, it is possible to stably obtain the effect of suppressing deviation and the permanent deformation suppression effect during storage of the sheet 11.

The storage period is not particularly limited, and examples thereof include 1 to 730 days. In addition, transportation and carrying may be performed during the storage period.

Although the embodiments of the present invention have been described above, these are examples of the present invention, and various configurations other than the above can be adopted. In addition, the present invention is not limited to the above-described embodiments, and modifications, improvements, and the like within a range in which the object of the present invention can be achieved are included in the present invention.

### [Examples]

Hereinafter, the embodiments will be described in detail with reference to Examples and Comparative Examples. It should be noted that the present embodiment is not limited to the descriptions of these examples.

### <Measuring Method>

### (1) Dynamic Viscoelasticity Measurement of 4-Methyl-1-Pentene-Based Polymer (a)

The 4-methyl-1-pentene-based polymer (a) was cut into a strip having a size of 30 mm in length × 10 mm in width to obtain a test piece. Next, for the obtained test piece, using MC 301 manufactured by Anton Paar GmbH, under the conditions of a chuck-to-chuck distance of 20 mm, a temperature dependence of dynamic viscoelasticity was measured in a temperature range of 0°C to 110°C, a frequency of 1.59 Hz, a strain amount of 0.1%, a temperature rising rate of 4 °C/min, and a twist mode. From the obtained graph, the temperature showing the local maximum value of the loss tangent (tan δ) and the local maximum value (Tg [°C]) of the tan δ were obtained respectively.

### (2) Intrinsic Viscosity [η] of 4-Methyl-1-Pentene-Based Polymer (a)

The intrinsic viscosity [η] was measured at 135°C using a decalin solvent.

### (3) Composition of 4-Methyl-1-Pentene-Based Polymer (a)

The contents of 4-methyl-1-pentene and α-olefin in the 4-methyl-1-pentene-based polymer (a) were quantitatively determined by ¹³C-NMR.

### (4) Density of 4-Methyl-1-Pentene-Based Polymer (a)

The density was calculated from the weight of each sample measured in water and air using an electronic densimeter MD-300S manufactured by ALFA MIRAGE Co., Ltd. according to ASTM D 1505 (underwater substitution method).

### (5) Melt Flow Rate (MFR) of 4-Methyl-1-Pentene-Based Polymer (a)

According to JIS K 7210, the measurement was performed under the conditions of 230°C and a test load of 2.16 kgf.

### (6) Static Friction Coefficient of Release Layer With Respect to Sheet

Slip test: The static friction coefficient was measured at a temperature of 23°C and a relative humidity of 50% in accordance with ASTM D 1893 for setting the test speed to 200 mm/min.

### (7) Tensile Load of Release Layer

Tensile load at 2% tensile elongation: The tensile load [N/15 mm] at a tensile elongation of 2% with respect to the MD direction of the test piece was obtained in a test environment at temperature of 23°C and a relative humidity of 50% while setting the tensile test conditions for the release layer such that the test piece size of the release layer was set to a strip shape with a width of 15 mm, the chuck-to-chuck distance was set to 100 mm, and the tensile speed was set to 100 mm/min.

### <Materials>

The materials used in Examples and Reference Examples are shown below.

### (1) 4-Methyl-1-pentene-based polymer (a): copolymer of 4-methyl-1-pentene and propylene (content of constitutional unit derived from 4-methyl-1-pentene: 72 mol%, content of constitutional unit derived from propylene: 28 mol%)

• Temperature showing local maximum value of loss tangent (tan δ): 28°C
· Local maximum value of loss tangent: 2.6
· Glass transition temperature: 28°C
· Intrinsic viscosity in decalin at 135°C [η]: 1.5 dL/g
· Density: 0.84 g/cm³
· MFR: 10 g/10 min

### (2) Foaming agent

· Chemical foaming agent: POLYTHLENE EE275F manufactured by Eiwa Chemical Ind. Co., Ltd.

### (3) Release Layer

· Release layer 1: biaxially stretched polypropylene double-sided roughened product ("WH-OP FM-0", manufactured by Mitsui Chemicals Tohcello Co., Ltd.)
· Release layer 2: biaxially stretched polypropylene double-sided smooth product ("ALPHAN SD-101" manufactured by Oji F-Tex Co., Ltd.)
· Release layer 3: non-stretched polypropylene single layer ("AROMA U #50", manufactured by Okamoto Industries, Inc.)
· Release layer 4: low-density polyethylene single layer ("LIX FILM/LIX-NP L4102", manufactured by Toyobo Co., Ltd.)
· Release layer 5: biaxially stretched PET single layer ("LUMIRROR #50-S10", manufactured by Toray Industries, Inc.)
· Release layer 6: one-sided silicone release coated biaxially stretched PET film ("SP-PET PET-01-T", manufactured by Mitsui Chemicals Tohcello Co., Ltd.)
· Release layer 7: silicone/polyethylene/kraft paper/polyethylene ("SUMILEASE SLK-50WST" manufactured by Sumika-kakoushi Co., Ltd.)
· Release layer 8: silicone/polyethylene/wood free paper ("SUMILEASE SLK-64WV2" manufactured by Sumika-kakoushi Co., Ltd.)

### <Preparation of Sheet (A)>

Using the above materials, a sheet containing a 4-methyl-1-pentene copolymer (hereinafter referred to as "sheet (A)") was prepared by the procedure shown below.

### (1) Preparation of Sheet (A-1)

A foam sheet using the 4-methyl-1-pentene-based polymer (a) was prepared.

As the molding machine, an apparatus including a single screw extrusion molding machine (cylinder inner diameter D: 50 mm, full flight screw, L/D when effective screw length is L: 32 mm), a T-die (die width: 320 mm, lip opening: 0.34 mm), a cooling roll (outer diameter: 50 mm, formed of steel subjected to mirror surface finish hard chrome plating surface treatment, water cooling type), and a take-off machine was used.

First, a chemical foaming agent (POLYTHLENE EE275F manufactured by Eiwa Chemical Ind. Co., Ltd.) was dry-blended at a mixing ratio of 3 parts by mass with respect to 100 parts by mass of the 4-methyl-1-pentene-based polymer (a), and the obtained mixture was put into a hopper, respectively. Each component raw material was melted and kneaded under the conditions of a temperature of 115°C to 190°C at each part of the cylinder and a screw rotation speed of 10 rpm, and the mixture was extruded from the T-die such that the extrusion amount was 3 kg/hour at a resin temperature of 160°C in the cylinder head portion. The extruded foam sheet was cooled by the cooling roll (water temperature flowing in the roll: 25°C), and taken off by using the take-off machine (take-off rate: 0.6 m/min) to obtain a 4-methyl-1-pentene copolymer foam sheet with a sheet width of about 280 mm (hereinafter, referred to as "sheet (A-1)").

The physical properties of the obtained sheet (A-1) are as follows.
· Temperature showing local maximum value of loss tangent (tan δ): 28°C
· Local maximum value of loss tangent: 2.6
· Thickness: 0.5 mm
· Density: 0.66 g/cm³

### (2) Preparation of Sheet (A-2)

A non-foam sheet formed of 100 parts by mass of the 4-methyl-1-pentene-based polymer (a) was prepared.

As the molding machine, an apparatus including a single screw extrusion molding machine (cylinder inner diameter D: 20 mm, full flight screw, L/D when effective screw length is L: 28 mm), a T-die (die width: 300 mm, lip opening: 0.6 mm), a cooling roll (outer diameter: 200 mm, formed of steel subjected to mirror surface finish hard chrome plating surface treatment, water cooling type), and a take-off machine was used.

100 parts by mass of 4-methyl-1-pentene-based polymer (a) was put into the hopper of the molding machine, and the raw material was melted and kneaded under the conditions of a temperature of 115°C to 230°C at each part of the cylinder and a screw rotation speed of 118 rpm, and extruded from the T-die such that the extrusion amount was 3.3 kg/hour at a resin temperature of 230°C in the cylinder head portion. The extruded non-foam sheet was cooled by the cooling roll (water temperature flowing in the roll: 20°C), and taken off by using the take-off machine (take-off rate: 0.7 m/min) to obtain a 4-methyl-1-pentene copolymer non-foam sheet with a sheet width of about 280 mm (hereinafter, referred to as "sheet (A-2)").

The physical properties of the obtained sheet (A-2) are as follows.
· Temperature showing local maximum value of loss tangent (tan δ): 28°C
· Local maximum value of loss tangent: 2.6
· Thickness: 0.6 mm
· Density: 0.84 g/cm³

### <Evaluation>

Subsequently, the following evaluation was performed using the sheet (A) and each release layer (hereinafter referred to as "separator (B)") so as to have the combinations shown in Table 1. The results are shown in Table 1.

It should be noted that in Table 1, the front surface of the sheet (A) indicates the side that comes into direct contact with the cooling roll when the sheet is prepared, and the back surface indicates the opposite surface of the front surface. In addition, the front surface of the separator (B) indicates the wound outer surface when the sheet is formed into a rolled body, and the back surface indicates the wound inner surface when the sheet is formed into a rolled body. However, in a case where the separator (B) has a silicone layer on one side, the side with the silicone layer is used as the back surface, and the opposite side is used as the front surface.

### (1) Measurement of Amount of Deviation During Vertical Storage of Rolled Body (Roll)

The amount of deviation when the separator (B) and the sheet (A) were alternately stacked and wound around the outer peripheral surface of the cylindrical core material to form a roll was evaluated.

First, both the separator (B) and the sheet (A) were prepared with a width of 280 mm and a total length of about 5 m. As the circular tubular core material, a paper tube (inner diameter: 50.8 mm, wall thickness: 2 mm, length: 400 mm) having both end surfaces perpendicular to the length direction of the circular tube was used. The separator (B) and the sheet (A) were continuously wound around the paper tube such that the middle of the separator (B) and the sheet (A) in the width direction coincided with the middle of the paper tube in the longitudinal direction, the sheet (A) (back surface) was directed to the paper tube side, and the sheet (A) (front surface) came into direct contact with the separator (B) (back surface) . Here, before starting the winding, the end surface of the sheet (A) on the winding start side was fixed to the outer peripheral surface of the paper tube with an adhesive tape together with the separator (B) in advance. Then, using an automatic winding machine, the sheet (A) and the separator (B) were simultaneously wound at a winding tension of 3 N and a winding speed of 1 m/min. The total winding length of the sheet (A) was set to 3 m. It should be noted that when winding, the central axis parallel to the paper tube and passing through the center of the circular cross section was set to be directed in the horizontal direction. Further, after winding, the end surface of the end of winding of the separator (B) was fixed with an adhesive tape so as not to come off. Further, the middle of the paper tube in the longitudinal direction, that is, a position 200 mm from both end surfaces of the paper tube was marked with an oil-based marker on the outer peripheral surface of the roll as a reference position before winding.

Then, the horizontal roll was gently removed from the winding machine, and the roll was left to stand on the upper surface of a steel surface plate with a rigid and flat horizontal plane such that the central axis parallel to the longitudinal direction of the paper tube and passing through the center of the circular cross section was placed vertically parallel from the horizontal direction to the vertical direction. At this time, of both ends of the paper tube in the longitudinal direction, only one end surface thereof comes into contact with the upper surface of the steel surface plate.

Thereafter, after 10 minutes had passed since the roll was placed vertically in order to check whether or not the marked position was deviated vertically downward due to the weight of the roll, the amount of winding deviation (mm) downward from the intermediate position of the paper tube in the longitudinal direction was measured and evaluated according to the following criteria.
Sheet (A): 3 m in length × 280 mm in width
Separator (B): 3 m in length × 280 mm in width
Test environment: temperature 23°C, relative humidity 50%

### · Criteria

A: The amount of winding deviation is less than 2 mm.
B: The amount of winding deviation is 2 mm or more and 5 mm or less.
C: The amount of winding deviation is 5 mm or more.

### (2) Blocking Force

The blocking force between the separator (B) and the sheet (A) was evaluated by the following method.

### (I) Measurement of blocking force for overlapping of separator (B) (back surface) and sheet (A) (front surface)

First, each of the separator (B) and the sheet (A) was cut into strips having a size of 100 mm in length × 50 mm in width. Next, the strips of the separator (B) (back surface) and the sheet (A) (front surface) were overlapped with each other in the longitudinal direction. A portion (50 mm in length × 50 mm in width) corresponding to a half the area of the two overlapped test pieces (100 mm in length × 50 mm in width) was interposed between two brass flat plates from the vertical direction, and a weight was placed on brass flat plates so that the total load (including the weight of one upper brass flat plate) was 24.5 N. Then, the brass flat plates were left to stand in a constant temperature bath in an environment at 40°C for 24 hours. Then, the weight was removed and the brass flat plates were left to stand for 30 minutes at room temperature.

Next, a round bar fixed in the horizontal direction (a round bar obtained in which a glass cloth adhesive tape (thickness: 80 um) impregnated with polytetrafluoroethylene was attached to a stainless steel tube with an outer diameter of 6 mm) was put into the gap in the portion where the separator (B) (back surface) and the sheet (A) (front surface) of the test pieces were overlapped with each other, the test pieces were pulled in the direction perpendicular to the round bar under the following conditions using a tensile tester, the separator (B) (back surface) and the sheet (A) (front surface) of the test pieces were peeled off, and the blocking force (= peeling force (N) /test piece width (50 mm)) was measured. Here, the initial value of the load when the test pieces were peeled off was set to a peeling force (N).
Test piece: 100 mm in length × 50 mm in width
Test environment: temperature 23°C, relative humidity 50%
Tension rate: 50 mm/min

Based on the obtained blocking force, the blocking force level between the separator (B) and the sheet (A) was evaluated according to the following criteria.

### · Criteria

A: The blocking force is less than 0.2 N/50 mm.
B: The blocking force is 0.2 N/50 mm or more and less than 3 N/50 mm.
C: The blocking force is 3 N/50 mm or more and less than 10 N/50 mm.
D: The blocking force is 10 N/50 mm or more.

### (II) Measurement of blocking force for overlapping of separator (B) (front surface) and sheet (A) (back surface)

Similar to the above (I), the blocking force was measured for the overlapping of the separator (B) (front surface) and the sheet (A) (back surface).

### (3) Peelability Evaluation Method When Unwinding Roll

From a roll in which both the separator (B) and the sheet (A) were wound at the same time, the peelability between the sheet (A) and the separator (B), related to the handleability at the time of unwinding, was evaluated by the following method.

First, as a roll, a roll was prepared by the same method as the roll used in the above-mentioned "Measurement of Amount of Winding Deviation".

Then, after maintaining the state in which the roll was placed vertically, the roll was left to stand in a constant temperature bath in an environment at 40°C for 24 hours.

Then, the roll was taken out and cooled in an environment of a temperature of 23°C and a relative humidity of 50% for 6 hours.

The ease of peeling the separator (B) and the sheet (A) from the roll by hand was evaluated according to the following criteria.

### · Criteria

A: There is close contact between the separator (B) and the sheet (A), but the sheet is peeled off smoothly.
B: When an attempt is made to peel off between the separator (B) and the sheet (A), the adhesion is high and the sheet (A) is peeled off with tensile elongation.
C: The adhesion is high, the sheet is firmly blocked at the peeling interface and cannot be peeled off.

**[Table 1]**

| | Sheet containing 4-methyl-1-pentene copolymer (sheet (A)) | Release layer (separator (B)) | | | | | Multilayer body | | Evaluation | | |
|---|---|---|---|---|---|---|---|---|---|---|---|
| | | | Material, constitution, and surface texture | Thickness | Measurement surface of static friction coefficient and blocking force | Tensile load at tensile elongation of 2% | Static friction coefficient | Sheet (A) to be overlapped with separator (B) | Amount of winding deviation during vertical storage of roll | Blocking force | Peelability when unwinding roll |
| | | | | [µm] | | [N/15 mm] | | | | | |
| Example 1 | Sheet (A-1) | Release layer 1 | Biaxially stretched polypropylene double-sided roughened product | 25 | Back surface | 8 | 0.8 | Sheet (A-1) (front surface) | A | A | A |
| | | | | | Front surface | | 0.8 | Sheet (A-1) (back surface) | | A | |
| Example 2 | Sheet (A-1) | Release layer 2 | Biaxially stretched polypropylene double-sided smooth product | 40 | Back surface | 17 | 1.6 | Sheet (A-1) (front surface) | A | A | A |
| | | | | | Front surface | | 1.6 | Sheet (A-1) (back surface) | | A | |
| Example 3 | Sheet (A-1) | Release layer 3 | Non-stretched polypropylene single layer | 50 | Back surface | 11 | 1.2 | Sheet (A-1) (front surface) | A | A | A |
| | | | | | Front surface | | 1.3 | Sheet (A-1) (back surface) | | A | |
| Example 4 | Sheet (A-1) | Release layer 4 | Low-density polyethylene single layer | 50 | Back surface | 3 | 1.3 | Sheet (A-1) (front surface) | A | A | A |
| | | | | | Front surface | | 1.2 | Sheet (A-1) (back surface) | | A | |
| Example 5 | Sheet (A-1) | Release layer 5 | Biaxially stretched PET single layer | 50 | Back surface | 56 | 1.9 | Sheet (A-1) (front surface) | A | B | A |
| | | | | | Front surface | | 1.9 | Sheet (A-1) (back surface) | | B | |
| Example 6 | Sheet (A-1) | Release layer 6 | One-sided silicone release coated biaxially stretched PET film | 30 | Back surface (silicone surface) | 37 | 0.2 | Sheet (A-1) (front surface) | A | B | A |
| | | | | | Front surface (PET surface) | | 1.6 | Sheet (A-1) (back surface) | | B | |
| Example 7 | Sheet (A-2) | Release layer 6 | One-sided silicone release coated biaxially stretched PET film | 30 | Back surface (silicone surface) | 37 | 2 or more | Sheet (A-2) (front surface) | A | B | A |
| | | | | | Front surface (PET surface) | | 2 or more | Sheet (A-2) (back surface) | | B | |
| Comparative Example 1 | Sheet (A-1) | Release layer 7 | Silicone/polyethylene/ kraft paper/polyethylene | 90 | Back surface (silicone surface) | 81 | 0.1 | Sheet (A-1) (front surface) | C | A | A |
| | | | | | Front surface (polyethylene surface) | | 0.9 | Sheet (A-1) (back surface) | | A | |
| Comparative Example 2 | Sheet (A-1) | Release layer 8 | Silicone/polyethylene/ wood free paper | 95 | Back surface (silicone surface) | 98 | 0.1 | Sheet (A-1) (front surface) | C | B | A |
| | | | | | Front surface (wood free paper surface) | | 1.2 | Sheet (A-1) (back surface) | | B | |
| Reference Example 1 | Sheet (A-1) | None | | 500 | Back surface | - | 1.2 | Sheet (A-1) (front surface) | A | D | C |
| Reference Example 2 | Sheet (A-2) | None | | 600 | Back surface | - | 1.2 | Sheet (A-2) (front surface) | A | D | C |

This application claims priority based on Japanese Patent Application No. 2020-057581 filed on March 27, 2020, the entire disclosure of which is incorporated herein.

### REFERENCE SIGNS LIST

- 10:: rolled body
- 11:: sheet
- 12:: release layer
- 13:: winding core
- 20:: support member
- 21:: recess portion
- 23:: packaging container
- 30:: package

## Claims

1. A multilayer body comprising:
two or more lamination units, each of which includes
a sheet containing a 4-methyl-1-pentene-based polymer, and
a release layer that is disposed on at least one surface of the sheet,
wherein the sheet has at least one or more temperatures showing a local maximum value of a loss tangent (tan δ), which is obtained by dynamic viscoelasticity measurement under conditions of a temperature rising rate of 4 °C/min, a frequency of 1.59 Hz, and a strain amount of 0.1%, in a range of 10°C or higher and 100°C or lower, and the local maximum value of the loss tangent is 0.5 or more and 3.5 or less, and
both surfaces of the release layer have a static friction coefficient of 0.2 or more with respect to the sheet (as measured at a temperature of 23°C and a relative humidity of 50% in accordance with ASTM D 1893 except for setting a test speed to 200 mm/min) .

2. The multilayer body according to claim 1,
wherein the 4-methyl-1-pentene-based polymer includes a constitutional unit derived from 4-methyl-1-pentene and a constitutional unit derived from an α-olefin having 2 to 20 carbon atoms other than the 4-methyl-1-pentene.

3. The multilayer body according to claim 1 or 2,
wherein when a sum of a constitutional unit derived from 4-methyl-1-pentene and a constitutional unit derived from an α-olefin having 2 to 20 carbon atoms other than the 4-methyl-1-pentene is 100 mol%, a content of the constitutional unit derived from the 4-methyl-1-pentene is 10 mol% or more and 90 mol% or less.

4. The multilayer body according to any one of claims 1 to 3,
wherein the release layer includes a layer formed of a synthetic resin.

5. The multilayer body according to any one of claims 1 to 4,
wherein an average thickness of the release layer is in a range of 10 to 85 um.

6. The multilayer body according to claim 4 or 5,
wherein the synthetic resin includes one or two or more kinds selected from a polyolefin-based resin, a polyvinyl alcohol resin, a polyester resin, a polyamide resin, a polyaramide resin, a polycarbonate resin, and a polystyrene resin.

7. The multilayer body according to any one of claims 1 to 6,
wherein the sheet is a foam and has a density of 0.10 to 0.80 g/cm³.

8. The multilayer body according to any one of claims 1 to 7,
wherein an average thickness of the sheet is in a range of 0.1 mm or more and 30 mm or less.

9. The multilayer body according to any one of claims 1 to 8,
wherein a tensile load [N/15 mm] of the release layer at a tensile elongation of 2% under conditions of a chuck-to-chuck distance of 100 mm, a tension rate of 100 mm/min, a temperature of 23°C, and a relative humidity of 50% is 1.0 N/15 mm or more and 1,000 N/15 mm or less.

10. A rolled body in which the multilayer body according to any one of claims 1 to 9 is wound around a winding core.

11. The rolled body according to claim 10,
wherein an overhang length of the winding core from at least one end portion in a width direction of the multilayer body with respect to a width of the multilayer body is 5 mm to 500 mm.

12. A package comprising:
the rolled body according to claim 10 or 11;
a packaging container that accommodates the rolled body; and
a support member that is disposed on a bottom surface of the packaging container and has a recess portion or a through hole into which the winding core of the rolled body is fitted,
wherein the winding core of the rolled body is supported by the recess portion or the through hole of the support member.

13. A method for storing a sheet comprising:
two or more steps of forming a lamination unit including
a sheet containing a 4-methyl-1-pentene-based polymer, and
a release layer that is disposed on at least one surface of the sheet; and
storing the sheet in an environment at 10°C to 100°C,
wherein the sheet has at least one or more temperatures showing a local maximum value of a loss tangent (tan δ), which is obtained by dynamic viscoelasticity measurement under conditions of a temperature rising rate of 4 °C/min, a frequency of 1.59 Hz, and a strain amount of 0.1%, in a range of 10°C or higher and 100°C or lower, and the local maximum value of the loss tangent is 0.5 or more and 3.5 or less, and
both surfaces of the release layer have a static friction coefficient of 0.2 or more with respect to the sheet (as measured at a temperature of 23°C and a relative humidity of 50% in accordance with ASTM D 1893 except for setting a test speed to 200 mm/min) .

14. The method for storing a sheet according to claim 13,
wherein the sheet is stored in an environment at 20°C to 50°C.

15. A method for storing the rolled body according to claim 10 or 11, comprising:
storing the rolled body in an environment at 10°C to 100°C.

16. The method for storing the rolled body according to claim 15,
wherein the rolled body is stored in an environment at 20°C to 50°C.

17. A method for storing the package according to claim 12, comprising:
storing the package in an environment at 10°C to 100°C.

18. The method for storing the package according to claim 17,
wherein the package is stored in an environment at 20°C to 50°C.
